# EUROPEAN PATENT SPECIFICATION

(11) **EP 4 184 828 B1**
(45) Date of publication and mention of the grant of the patent: **02.12.2026**
(21) Application number: 21855500.1
(22) Date of filing: 09.08.2021
(51) Int. Cl.: H04L 1/00, H04L 27/22, H04W 4/70, H04L 27/20

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(30) Priority: 10.08.2020 CN 202010798004
(43) Date of publication of application: 24.05.2023
(73) Proprietor: Huawei Technologies Co., Ltd., Shenzhen, Guangdong 518129 (CN)
(72) Inventor: WANG, Lei, Shenzhen, Guangdong 518129 (CN); ZHANG, Lei, Shenzhen, Guangdong 518129 (CN)
(74) Representative: Grünecker Patent- und Rechtsanwälte PartG mbB
(86) International application number: PCT/CN2021/111617
(87) International publication number: WO 2022/033448

(56) References cited:
- WO-A1-2018/234851
- CN-A- 108 365 848
- CN-A- 108 462 554
- CN-A- 111 447 160
- US-A- 6 140 947
- US-A1- 2020 244 495
- VAMSI K AMALLADINNE ET AL: "A Coded Compressed Sensing Scheme for Uncoordinated Multiple Access", ARXIV.ORG, CORNELL UNIVERSITY LIBRARY, 201 OLIN LIBRARY CORNELL UNIVERSITY ITHACA, NY 14853, 13 September 2018 (2018-09-13), XP081380311
- MEHMOOD ALAM ET AL: "Sequence Block based Compressed Sensing Multiuser Detection for 5G", ARXIV.ORG, CORNELL UNIVERSITY LIBRARY, 201 OLIN LIBRARY CORNELL UNIVERSITY ITHACA, NY 14853, 27 September 2018 (2018-09-27), XP081195263

## Description

### DATA TRANSMISSION METHOD AND APPARATUS

This application claims priority to Chinese Patent Application No. 202010798004.4, filed with the China National Intellectual Property Administration on August 10, 2020 and entitled "DATA TRANSMISSION METHOD AND APPARATUS".

### TECHNICAL FIELD

This application relates to the field of communication technologies, and in particular, to a data transmission method and apparatus.

### BACKGROUND

A new radio (New Radio, NR) technology covers three application scenarios: enhanced mobile broadband (enhanced Mobile Broadband, eMBB), massive machine type communication (massive Machine Type Communication, mMTC), and ultra-reliable and low latency communication URLLC (Ultra-Reliable and Low Latency Communication). The mMTC is characterized by support for massive machine type communication. In an mMTC scenario, there are a large quantity of potential to-be-accessed users in a cell, and these users may be terminal devices in various forms. In this scenario, the users send relatively small data packets each time. However, because there are a quite large quantity of users, a quite serious challenge is posed to network access performance and data transmission performance.

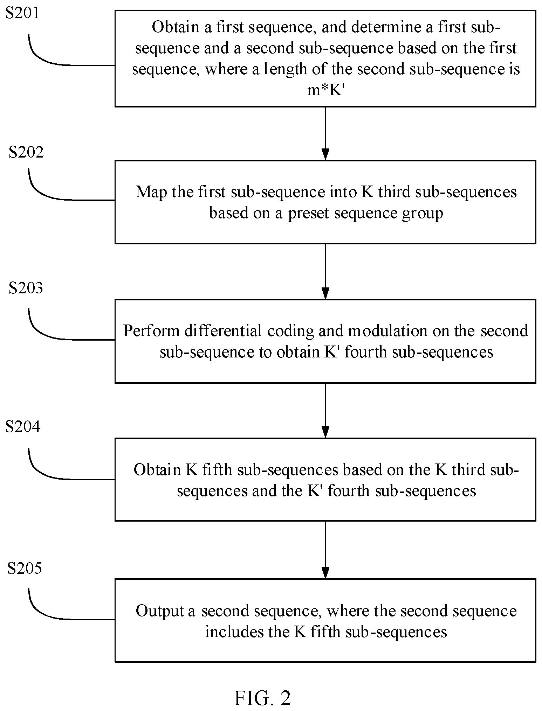

The paper "A Coded Compressed Sensing Scheme for Uncoordinated Multiple Access", ARXIV.ORG, CORNELL UNIVERSITY LIBRARY, by VAMSI K AMALLADINNE ET AL, discloses an unsourced transmission method wherein all the active users share a same codebook. As shown in figure 2, the information bits are split into sub-blocks and redundancy is added to individual components. Transmitted signals are then mapped to predetermined sequences via a CS matrix, and sent over a MAC channel. The receiver runs the reverse method, using the CS matrix for demapping the received sequences and performing a tree-decoding algorithm based on the added redundancy, in order to identify linked sub-blocks.

The patent document US 2020/244495 A1 discloses a transmission and reception technique for grant-free access in massive MTC networks based on differential encoding (time, frequency, segment) and subsequent spreading of transmission packets.

The paper "Sequence Block based Compressed Sensing Multiuser Detection for 5G", ARXIV.ORG, CORNELL UNIVERSITY LIBRARY, by MEHMOOD ALAM ET AL, discloses a grant-free, non-orthogonal code division multiple access (CDMA), transmission method for mMTCs. In this document, a block of sequences is used as signature of the user instead of single sequence. After differential modulation, DQPSK, the modulated data frame of the user is divided into a number of symbol groups, which are spread over the corresponding spreading sequences, which are specific of the user.

### SUMMARY

The present invention is defined by the attached claims.

### BRIEF DESCRIPTION OF DRAWINGS

The following describes some accompanying drawings in embodiments of this application.
FIG. 1 is a schematic diagram of a communication system according to an embodiment of this application;
FIG. 2 is a schematic flowchart of a data transmission method at a transmit end according to an embodiment of this application;
FIG. 3 is a schematic diagram of a data processing method according to an embodiment of this application;
FIG. 4 is a schematic diagram of another data processing method according to an embodiment of this application;
FIG. 5 is a schematic diagram of a first sub-sequence mapping method according to an embodiment of this application;
FIG. 6 is a schematic diagram of another first sub-sequence mapping method according to an embodiment of this application;
FIG. 7 is a schematic flowchart of a data transmission method at a receive end according to an embodiment of this application;
FIG. 8 is a schematic diagram of a structure of a communication apparatus according to an embodiment of this application;
FIG. 9 is a schematic diagram of a structure of another communication apparatus according to an embodiment of this application; and
FIG. 10 is a schematic diagram of a structure of still another communication apparatus according to an embodiment of this application.

### DESCRIPTION OF EMBODIMENTS

Embodiments of this application provide a data transmission method and apparatus, to improve data transmission accuracy in a scenario in which there are a large quantity of users and small packets are transmitted.

It should be noted that, the term "and/or" in this specification describes only an association relationship for describing associated objects and represents that three relationships may exist. For example, A and/or B may represent the following three cases: Only A exists, both A and B exist, and only B exists. In the specification and claims in embodiments of this application, the terms "first", "second", and the like are intended to distinguish between different objects but do not indicate a particular order of the objects. For example, a first sequence and a second sequence are used to distinguish between different sequences, and are not used to describe a specific sequence of target objects. In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner. In the description of embodiments of this application, unless otherwise stated, "a plurality of" means two or more than two. For example, a plurality of processing units mean two or more processing units, and a plurality of systems mean two or more systems. In embodiments of this application, "agreed on by a receive end and a transmit end" may be "specified in a protocol", may be "negotiated by the receive end and the transmit end by using signaling", or may be "configured by the receive end or the transmit end". This is not limited in this application.

The following briefly describes related concepts in embodiments of this application.

mMTC is one of three typical services supported by 5G. Typical mMTC services include power distribution automation of a smart grid, a smart city, and the like. Main characteristics are as follows: There are a large quantity of networking devices, an amount of transmitted data is relatively small, and data is insensitive to a transmission delay.

An MTC device is a terminal device that supports the mMTC service. The MTC device may be a wireless device or may be a wired device. The wireless device may be a device with a wireless receiving/sending function, and may be deployed on land and include an indoor or outdoor device, a handheld device, or a vehicle-mounted device, or may be deployed on the water (for example, a ship), or may be deployed in the air (for example, an airplane, a balloon, or a satellite). The MTC device may be a mobile phone (mobile phone), a tablet computer (Pad), a computer with the wireless receiving/sending function, user equipment (user equipment, UE), an access terminal, a subscriber unit (subscriber unit), a user station, a mobile station, a mobile console (mobile station), a handheld device with a wireless communication function, a computing device or another processing device connected to a wireless modem, a vehicle-mounted device or a wearable device, a virtual reality (Virtual Reality, VR) terminal device, an augmented reality (Augmented Reality, AR) terminal device, a wireless device in industrial control (industrial control), a wireless device in self driving (self driving), a wireless device in telemedicine (remote medical), a wireless device in a smart grid (smart grid), a wireless device in transportation safety (transportation safety), a wireless device in a smart city (smart city), a wireless device in a smart home (smart home), or the like. This is not limited herein.

The technical solutions provided in this application may be applied to a plurality of communication systems, for example, a 4th generation (4th generation, 4G) communication system such as a long term evolution (long term evolution, LTE) system, a worldwide interoperability for microwave access (worldwide interoperability for microwave access, WiMAX) communication system, or a wireless fidelity (Wireless Fidelity, Wi-Fi) system, a 5th generation (5th generation, 5G) communication system such as a new radio (new radio, NR) system, and a future mobile communication system.

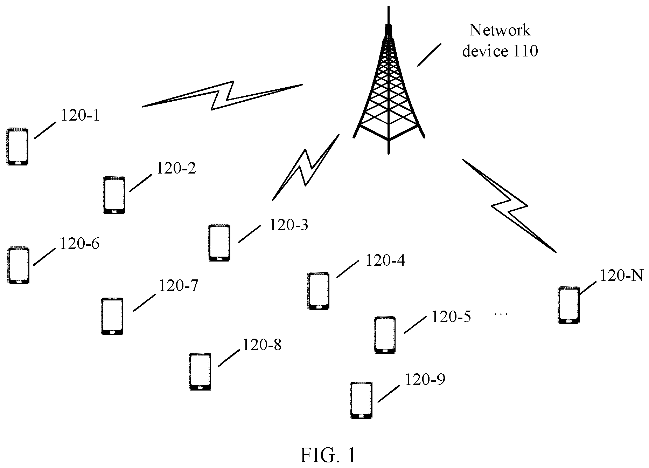

FIG. 1 shows an example of a communication system applicable to embodiments of this application. As shown in FIG. 1, the network architecture includes a network device 110 and terminal devices (120-1, 120-2, ..., 120-N, and the like), and a base station 10 is connected to each terminal device by using a wireless network.

The terminal device 120 may be any one of the foregoing MTC devices, and details are not described herein again.

The network device 110 may be an evolved NodeB (evolutional NodeB, eNB or eNodeB) in LTE, a base station in a 5G network or a future evolved public land mobile network (public land mobile network, PLMN), a broadband network gateway (broadband network gateway, BNG), an aggregation switch, a 3rd generation partnership project (3rd generation partnership project, 3GPP) access device, or the like. Optionally, the network device in this embodiment of this application may include various forms of base stations, for example, a macro base station, a micro base station (also referred to as a small cell), a relay station, an access point, a 5G base station, a future device that implements a base station function, a transmitting and receiving point (transmitting and receiving point, TRP), a transmitting point (transmitting point, TP), a mobile switching center, or devices that undertake a base station function in device-to-device (Device-to-Device, D2D), vehicle-to-everything (vehicle-to-everything, V2X), and machine-to-machine (machine-to-machine, M2M) communication. This is not specifically limited in this embodiment of this application.

The network device 110 may interact with another network device (not shown), and may further communicate and interact with a core network device, to provide a communication service for the terminal device. For example, the core network device is a device in a 5G core network (core network, CN). As an interface from a bearer network to a data network, the core network provides a communication connection, authentication, management, policy control, data service bearer completion, and the like for user equipment (user equipment, UE).

In an mMTC scenario, there are a large quantity of potential to-be-accessed users in a cell, and the user may be any one of the foregoing terminal devices. These users send relatively small data packets each time. However, because there are a quite large quantity of users, a quite serious challenge is posed to network access performance and data transmission performance.

For the mMTC scenario, currently, an unsourced transmission (Unsourced transmission) solution is mainly discussed, a plurality of users transmit data by using a same codebook, and identifiers of the users are not carried. It is considered that this solution can support large-scale access in the mMTC scenario. For example, information bits sent by the user are first divided into blocks, and a check bit is added after each information bit block, to form a plurality of encoded sub-blocks. Then a sequence is selected, based on a binary value of the encoded sub-block, from a preset sequence group (codebook) for sending.

In the foregoing solution, a quantity of information bits that can be transmitted is affected by a quantity of sequences in the sequence group. To transmit more information bits, a size of the sequence group needs to exponentially increase. A larger sequence group indicates a higher correlation between sequences in the group and a corresponding decrease in detection performance of a receive end.

To transmit more information bits without affecting detection performance of the receive end, embodiments of this application provide a data transmission method and apparatus.

The following describes embodiments of this application with reference to accompanying drawings in embodiments of this application.

FIG. 2 is a schematic flowchart of data transmission at a transmit end according to an embodiment of this application. It should be noted that the transmit end refers to a side on which data is sent, and the method may be performed by a terminal device or a network device.

S201: Obtain a first sequence, and determine a first sub-sequence and a second sub-sequence based on the first sequence, where a length of the first sub-sequence is B, and a length of the second sub-sequence is m*K'.

In a possible implementation, the first sub-sequence and the second sub-sequence are different sequences. In this implementation, most information bits, to be specific, B+m*K' bits, can be transmitted.

In another possible implementation, the first sub-sequence and the second sub-sequence may have overlapping parts. For example, the second sub-sequence is a part of the first sub-sequence, or the second sub-sequence and the first sub-sequence are a same sequence, or the second sub-sequence includes a part of the first sub-sequence and another information bit. In this implementation, some or all bits of the first sub-sequence are repeatedly transmitted, so that transmission reliability of the first sub-sequence can be improved.

S202: Map the first sub-sequence into K third sub-sequences based on a preset sequence group.

The preset sequence group may also be referred to as a preset codebook. The preset sequence group is specified in a protocol or is a sequence group agreed on in advance by a receive end and the transmit end. For example, when the transmit end is a terminal device, the preset sequence group may be a sequence group delivered by a network device. How to obtain the preset sequence group is not limited in this application.

It should be noted that a sequence group such as the "preset sequence group", a "common sequence group", or a "sequence subgroup" in this application includes sequentially arranged sequences. Assuming that the sequence group includes N sequences, sequence numbers of the sequences in the sequence group are successively 0 to N-1. Possibly, the sequence group may be in a matrix form of M rows and N columns, and in this case, the sequence group includes N sequences, and a length of each sequence is M. Possibly, in the sequence group, lengths of sequences may be different. Possibly, the sequence group may be in a form of a sequence set, and in this case, sequences in the sequence set have unique and different sequence numbers or indexes. Assuming that there are N sequences in the sequence set, a value range of the sequence number or the index is 0 to N-1.

It should be noted that a length of the first sub-sequence that can be transmitted depends on a quantity of sequences in the sequence group.

In a possible implementation, K seventh sub-sequences are obtained based on the first sub-sequence; and each seventh sub-sequence is mapped into each corresponding third sub-sequence based on a value of each of the K obtained seventh sub-sequences and the preset sequence group. Each third sub-sequence is a sequence in the preset sequence group. For example, a sequence number of each third sub-sequence in the preset sequence group is equal to the value of each seventh sub-sequence.

Possibly, some or all of the K seventh sub-sequences include check bits. For example, the K seventh sub-sequences are obtained by dividing the first sub-sequence into K eighth sub-sequences and adding check bits to some or all of the K eighth sub-sequences.

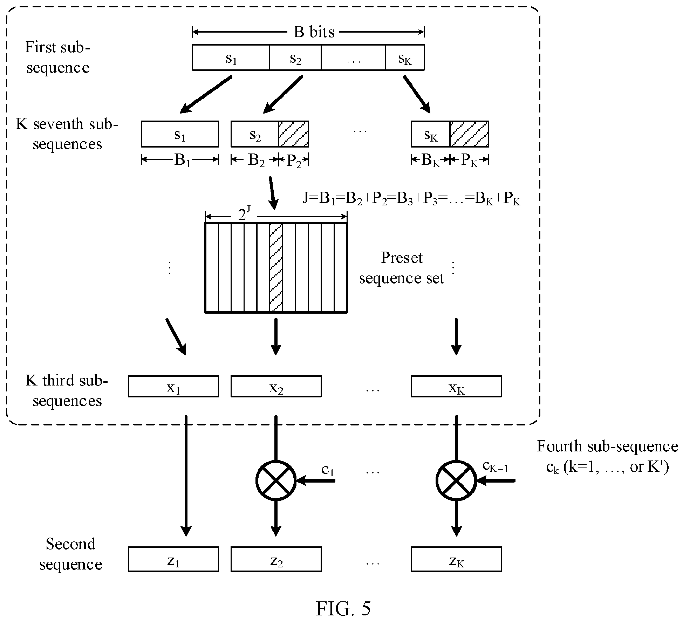

For example, as shown in FIG. 5, a first sub-sequence is divided into K eighth sub-sequences. A value of the eighth sub-sequence is Sₖ (k=1, ..., or K), and a length of the eighth sub-sequence is Bₖ (k=1, ..., or K). Check bits of each eighth sub-sequence are calculated, and check bits are placed after the eighth sub-sequences to obtain K seventh sub-sequences. A length of the check bits is Pₖ (k=1, ..., or K). In FIG. 5, P₁=0, and J=B₁+P₁=B₂+P₂=... =B_{K}+P_{K}. In other words, each seventh sub-sequence has an equal length of information bits and check bits, and the length is J. In addition, each seventh sub-sequence corresponds to one preset sequence group, there are 2^J sequences in the sequence group, and the sequences in the sequence group correspond to different index values, namely, sequence numbers. A value range of the index value is 0 to 2^J-1. A corresponding sequence is selected from the preset sequence group based on a value of each seventh sub-sequence, to be specific, a value of added check bits and information bits, to obtain each third sub-sequence.

Possibly, preset sequence groups corresponding to the seventh sub-sequences may be a same sequence group, or may be different sequence groups.

It should be noted that a check bit obtaining manner is agreed on in advance by the receive end and the transmit end. A check bit calculation manner is not limited in this application. For example, the k^{th} check bit may be generated through encoding based on one or more preceding eighth sub-sequences.

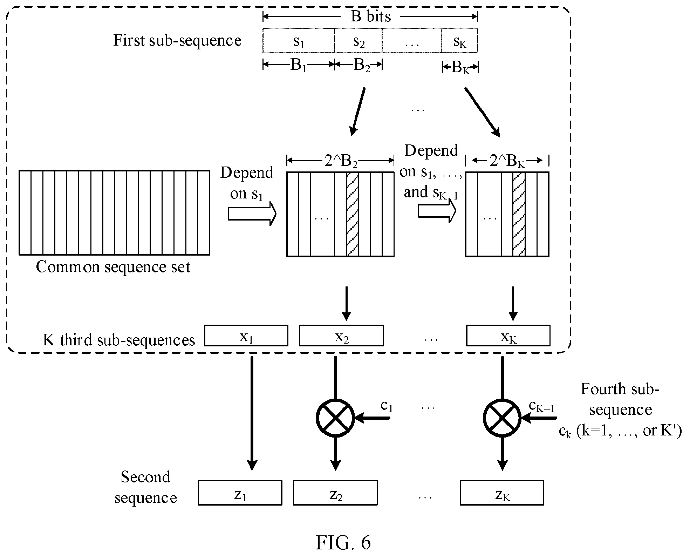

In another possible implementation, as shown in FIG. 6, K seventh sub-sequences are obtained based on a first sub-sequence whose length is B. A value of the seventh sub-sequence is Sₖ (k=1, ..., or K), a length of the seventh sub-sequence is Bₖ (k=1, ..., or K), and $B = {\sum }_{k = 1}^{K} {B}_{k}$. A value of the n^{th} first sub-sequence refers to a decimal number corresponding to a bit sequence whose length is Bₙ. A common sequence group is preset by the receive end and the transmit end, there are 2^B₁ sequences in the common sequence group, and the sequences in the sequence group correspond to different index values, namely, sequence numbers. A value range of the index value is 0 to 2^B₁-1. A corresponding sequence is selected from the common sequence group based on a value S₁ of the first seventh sub-sequence, to obtain the first third sub-sequence. The n^{th} seventh sub-sequence corresponds to the n^{th} sequence subgroup, and the sequence subgroup includes 2^Bₙ sequences in the common sequence group. Specifically, the n^{th} sequence subgroup depends on values S₁, ..., and Sₙ₋₁ of the first to the (n-1)^{th} seventh sub-sequences. A corresponding sequence is selected from the n^{th} sequence subgroup based on a value Sₙ of the n^{th} seventh sub-sequence, to obtain the n^{th} third sub-sequence. For example, in FIG. 6, the second sequence subgroup depends on S₁, and the K^{th} sequence subgroup depends on S₁, ..., and S_{K-1}.

In the implementation shown in FIG. 6, instead of calculating a check bit, a sequence subgroup corresponding to a sub-sequence is determined based on a value of a previous sub-sequence, so that reliability of data transmission is ensured in a manner of lower calculation complexity.

S203: Perform differential coding and modulation on the second sub-sequence to obtain a fourth sub-sequence whose length is K'.

In a possible implementation, differential coding is performed before modulation. Specifically, differential coding is performed on the second sub-sequence to obtain a sixth sub-sequence whose length is m*K'; and the sixth sub-sequence whose length is m*K' is modulated to obtain the fourth sub-sequence whose length is K'.

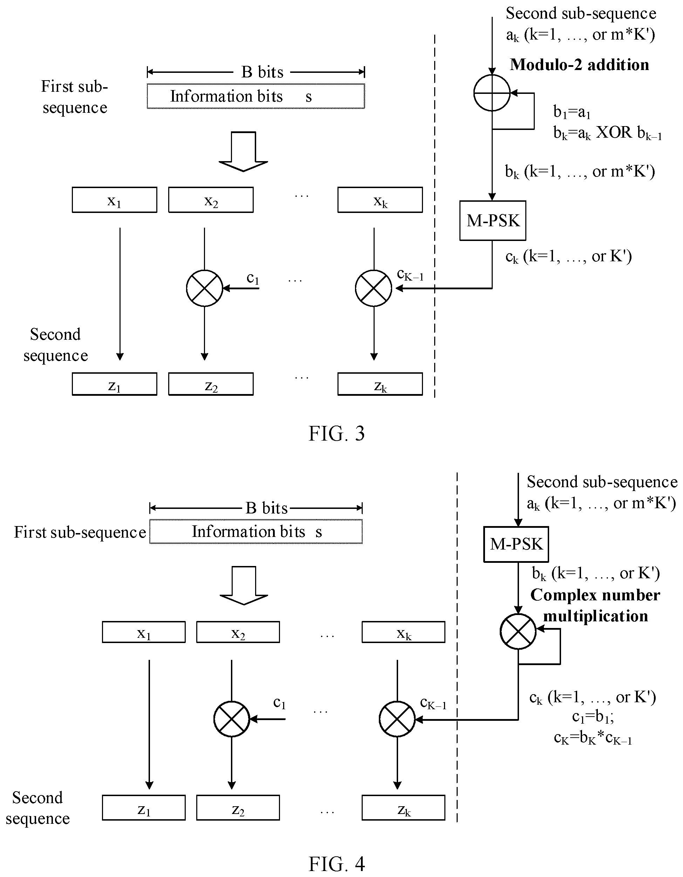

For example, as shown in FIG. 3, refer to the right half of FIG. 3, differential coding is performed on the second sub-sequence aₖ (k=1, ..., or m*K') to obtain the sixth sub-sequence bₖ (k=1, ..., or m*K') whose length is m*K'. For example, differential coding may be performed in a form of modulo-2 addition. Specifically,
b₁=a₁; and
bₖ=aₖ XOR bₖ₋₁, where k=2, ..., or m*K', m*K' is greater than or equal to 2, and XOR indicates a binary exclusive OR operation.

The sixth sub-sequence bₖ (k=1, ..., or m*K') is modulated to obtain the fourth sub-sequence cₖ (k=1, ..., or K') whose length is K'. Specifically, M-ary phase shift keying (M-ary phase shift keying, MPSK) modulation may be performed on the sixth sub-sequence to obtain the fourth sub-sequence, where m=log₂M, and M is an integer power of 2.

In another possible implementation, modulation is performed before differential coding. Specifically, the second sub-sequence is modulated to obtain a sixth sub-sequence whose length is K'; and differential coding is performed on the sixth sub-sequence to obtain the fourth sub-sequence whose length is K'.

For example, as shown in FIG. 4, refer to the right half of FIG. 4, the second sub-sequence aₖ (k=1, ..., or m*K') is modulated to obtain the sixth sub-sequence bₖ (k=1, ..., or K'). Specifically, MPSK modulation may be performed on the second sub-sequence to obtain the fourth sub-sequence, where m=log₂M, M is a modulation order of the MPSK modulation, and a value of M is an integer power of 2.

Differential coding is performed on the sixth sub-sequence bₖ (k=1, ..., or K') to obtain the fourth sub-sequence cₖ (k=1, ..., or K') whose length is K'. Specifically,
c₁=b₁; and
cₖ=bₖ*cₖ₋₁, where k=2, ..., or K', and K' is an integer greater than or equal to 2.

In the foregoing two possible implementations, M-PSK may have different implementations. For example, the sixth sub-sequence or the second sub-sequence is divided into K' groups by using m bits as one group. Each group of bits has 2^m=M different values, and each value corresponds to one element in a group that includes M elements. Each element in this group is a complex number, and may be defined as exp(j*2*π*k/M+θ), where k=0, 1, ..., or M-1, exp represents an exponential operation, j is an imaginary unit, π is a ratio of circumference to diameter, θ is an initial value of a phase, and θ may be any value.

The sixth sub-sequence may be mapped, through M-PSK, into K' complex numbers, namely, the fourth sub-sequence cₖ (k=1, ..., or K') whose length is K', or the second sub-sequence may be mapped, through M-PSK, into K' complex numbers, namely, the sixth sub-sequence bₖ (k=1, ..., or K') whose length is K'.

The modulation order M may be 2, in other words, binary phase shift keying (Binary Phase Shift Keying, BPSK) modulation is performed on the sixth sub-sequence or the second sub-sequence. In this case, m=1, and K' bits can be additionally transmitted. M may be 4, in other words, quadrature phase shift keying (Quadrature Phase Shift Keying, QPSK) modulation is performed on the sixth sub-sequence or the second sub-sequence. In this case, m=2, and 2K' bits can be additionally transmitted. M may be 8, in other words, 8 phase shift keying 8PSK modulation is performed on the sixth sub-sequence or the second sub-sequence. In this case, m=3, and 3K' bits can be additionally transmitted.

It should be noted that a higher modulation order indicates a larger quantity of bits that can be transmitted. Selection of the modulation order is related to a value of an amount of transmitted data. If an amount of data that needs to be transmitted is relatively small, lower-order modulation such as BPSK may be used to ensure accuracy of data transmission; or if an amount of data that needs to be transmitted is relatively large, higher-order modulation may be used, so that more data can be transmitted when a same resource is occupied.

In addition, a sequence of performing step S202 and step S203 is not limited in this application. For example, S202 may be performed before S203, S203 may be performed before S202, or S202 and S203 may be simultaneously performed.

S204: Obtain K fifth sub-sequences based on the K third sub-sequences and the fourth sub-sequence whose length is K'.

The fourth sub-sequence whose length is K' and that is obtained in S203 is a complex sequence. The K third sub-sequences and elements in the fourth sub-sequence are multiplied, so that a phase of the fourth sub-sequence can be flipped or shifted.

The obtaining K fifth sub-sequences zₖ (k=1, ..., or K) based on the K third sub-sequences xₖ and the fourth sub-sequence cₖ whose length is K' is specifically:
z₁=x₁, where k=1, ... , or K-K'; and
zₖ=cₖ₋₁*Xₖ, where k=K-K'+1, ..., or K.

The length K' of the fourth sub-sequence is less than a quantity K of third sub-sequences.

For example, refer to FIG. 3 or FIG. 4. The K fifth sub-sequences are sequentially z₁=x₁, z₂=c_{1*}x₂, ..., and z_{K}=c_{K'*}x_{K}, where K'=K-1. In the scenarios shown in FIG. 3 and FIG. 4, most bits, to be specific, (K-1) bits, can be additionally transmitted.

K' may be alternatively another value less than K. For example, when K'=1, the K fifth sub-sequences are sequentially z₁=x₁, z₂=x₂, ..., and z_{K}=c_{l*}x_{K}, and 1 bit can be additionally transmitted.

S205: Output a second sequence, where the second sequence includes the K fifth sub-sequences.

The second sequence including the K fifth sub-sequences is output. For example, the transmit end sends the second sequence to the receive end, and correspondingly, the receive end may receive the second sequence.

Compared with a conventional communication manner, in the technical solution provided in this application, no pilot needs to be transmitted, and the receive end may perform reception through compressive sensing. On this basis, in the foregoing embodiment, sent information bits are divided into two parts, a first part is mapped into a plurality of short sequences (the K third sub-sequences), differential coding and modulation are performed on a second part to obtain a complex sequence (the fourth sequence whose length is K'), and an element in the sequence and a corresponding short sequence are multiplied, so that a phase of the short sequence is flipped or shifted, thereby additionally transmitting information bits.

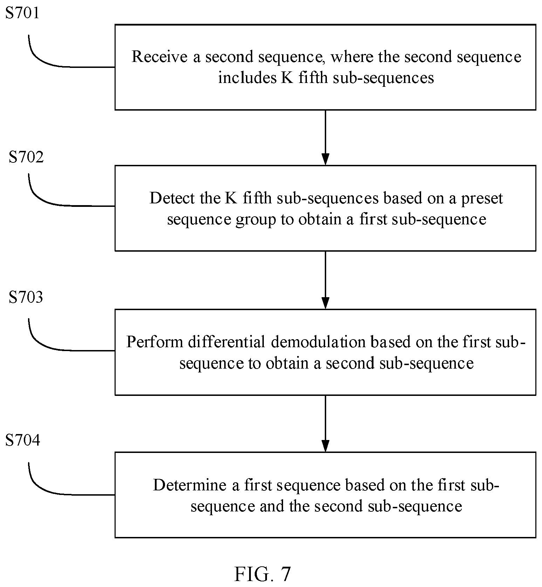

FIG. 7 is a schematic flowchart of data transmission at a receive end according to an embodiment of this application. It should be noted that the receive end refers to a side on which data is received, and the method may be performed by a terminal device or a network device. For example, when a transmit end is a terminal device, the receive end may be a terminal device or a network device, or when a transmit end is a network device, the receive end may be a terminal device or a network device. This is not limited in this application.

S701: Receive a second sequence, where the second sequence includes K fifth sub-sequences.

The receive end receives the second sequence sent by the transmit end. The second sequence includes the K fifth sub-sequences.

S702: Detect the K fifth sub-sequences based on a preset sequence group to obtain a first sub-sequence.

The first sub-sequence includes K seventh sub-sequences.

The detecting the K fifth sub-sequences based on a preset sequence group is specifically: detecting the fifth sub-sequence based on the preset sequence group, and determining a sequence number or an index number of a sequence that is in the preset sequence group and that corresponds to the fifth sub-sequence, where the sequence number or the index number is a value of the seventh sub-sequence; and determining the seventh sub-sequence based on the value of the seventh sub-sequence.

Possibly, the foregoing detection is correlation detection. The determined sequence number or index number of the sequence that is in the preset sequence group and that corresponds to the fifth sub-sequence is specifically a sequence number or an index number of a sequence that is in the preset sequence group that has a highest correlation with the fifth sub-sequence.

A length of each of the K seventh sub-sequences is agreed on by the receive end and the transmit end. The determining the seventh sub-sequence based on the value of the seventh sub-sequence is specifically: determining a value of each bit of the seventh sub-sequence based on the length and the value of the seventh sub-sequence.

Possibly, the first sub-sequence includes K eighth sub-sequences, and the K seventh sub-sequences are obtained by adding check bits to some or all of the K eighth sub-sequences, in other words, some or all of the K seventh sub-sequences include check bits. In this implementation, after the seventh sub-sequence is determined through detection based on the preset sequence group, verification is performed based on a check manner agreed on by the receive end and the transmit end, and the K eighth sub-sequences are restored after the verification succeeds, so that the first sub-sequence sent by the transmit end is obtained.

In a possible implementation, K preset groups corresponding to all of the K seventh sub-sequences are agreed on by the receive end and the transmit end. For example, refer to the mapping method shown in FIG. 5. In this implementation, the n^{th} fifth sub-sequence is detected based on the n^{th} preset sequence group to determine the n^{th} seventh sub-sequence, where n is an integer greater than or equal to 1 and less than or equal to K.

In another possible implementation, a common sequence group is agreed on by the receive end and the transmit end. For example, refer to the mapping method shown in FIG. 6. In this implementation, the K fifth sub-sequences are detected based on the common sequence group to determine the K seventh sub-sequences. Specifically,
the first fifth sub-sequence is detected based on the common sequence group to determine a value of the first seventh sub-sequence.

The second sequence subgroup corresponding to the second fifth sub-sequence is determined based on the value of the first seventh sub-sequence and the common sequence group, and the second fifth sub-sequence is detected based on the second sequence subgroup to determine a value of the second seventh sub-sequence.

By analogy, the n^{th} sequence subgroup corresponding to the n^{th} fifth sub-sequence is determined based on values of the first to the (n-1)^{th} fifth sub-sequences and the common sequence group, where n ∈ [2, K]. The n^{th} fifth sub-sequence is detected based on the n^{th} sequence subgroup to determine a value of the n^{th} seventh sub-sequence.

S703: Perform differential demodulation based on the first sub-sequence to obtain a second sub-sequence.

Differential demodulation is performed based on a phase difference between the first sub-sequence of the transmit end and the second sequence received by the receive end, to obtain the second sub-sequence. In other words, differential demodulation is performed based on a phase difference between the restored seventh sub-sequence and the received fifth sub-sequence to obtain the second sub-sequence.

Specifically, a phase difference Hₖ between the k^{th} fifth sub-sequence and the k^{th} seventh sub-sequence is determined; and a phase difference Hₖ₋₁ between the (k-1)^{th} fifth sub-sequence and the (k-1)^{th} seventh sub-sequence is determined.

Differential demodulation is performed on Hₖ and Hₖ₋₁ to obtain a_{k-(K-K')} in the second sub-sequence, where k=K-K'+1, ..., or K, K is a quantity of seventh sub-sequences or a format of the fifth sub-sequence, a value of K is an integer greater than or equal to 2, K' is a length of the second sub-sequence, and a value of K' is a positive integer less than K.

For example, in the scenario shown in FIG. 3 or FIG. 4, K'=K-1, and differential demodulation is performed on H_{K} and H_{K-1} to obtain aₖ₋₁ in the second sub-sequence, where k=2, ..., or K. For example, differential demodulation is performed on H₂ and H₁ to obtain a₁, and differential demodulation is performed on H_{K} and H_{K-1} to obtain a_{K-1}, namely, a_{K'}.

K' may be alternatively another value less than K. For example, when K'=1, differential demodulation is performed on H_{K} and H_{K-1} to obtain a₁.

S704: Determine a first sequence based on the first sub-sequence and the second sub-sequence.

The first sub-sequence is determined in S702, and differential demodulation is performed based on the first sub-sequence to obtain the second sub-sequence in S703, to determine the first sequence, namely, data bits sent by the transmit end.

In a possible implementation, the first sub-sequence and the second sub-sequence may have overlapping parts. For example, the second sub-sequence is a part of the first sub-sequence, or the second sub-sequence and the first sub-sequence are a same sequence, or the second sub-sequence includes a part of the first sub-sequence and another information bit. In other words, the transmit end repeatedly transmits some or all bits of the first sub-sequence. After restoring the first sub-sequence and the second sub-sequence, the receive end compares the overlapping parts of the first sub-sequence and the second sub-sequence to determine whether the overlapping parts are the same. If the overlapping parts are the same, it indicates that the transmission is correct; or if the overlapping parts are different, it indicates that an error occurs in the transmission. In this implementation, reliability of data transmission can be improved.

In the transmission method shown in FIG. 7, after receiving the second sequence, the receive end can obtain the first sub-sequence through detection, and then obtain the second sub-sequence through differential demodulation, so that when the second sub-sequence is additionally transmitted in addition to the first sub-sequence, data actually to be transmitted by the transmit end is restored.

To implement functions in the foregoing methods provided in embodiments of this application, a receive end device and a transmit end device each may include a hardware structure and/or a software module, and implement the foregoing functions in a form of a hardware structure, a software module, or a hardware structure and a software module. The receive end device may be a terminal device or a network device. Similarly, the transmit end device may be a terminal device or a network device. Whether one of the foregoing functions is performed in the manner of a hardware structure, a software module, or a hardware structure and a software module depends on a specific application and design constraints of the technical solutions.

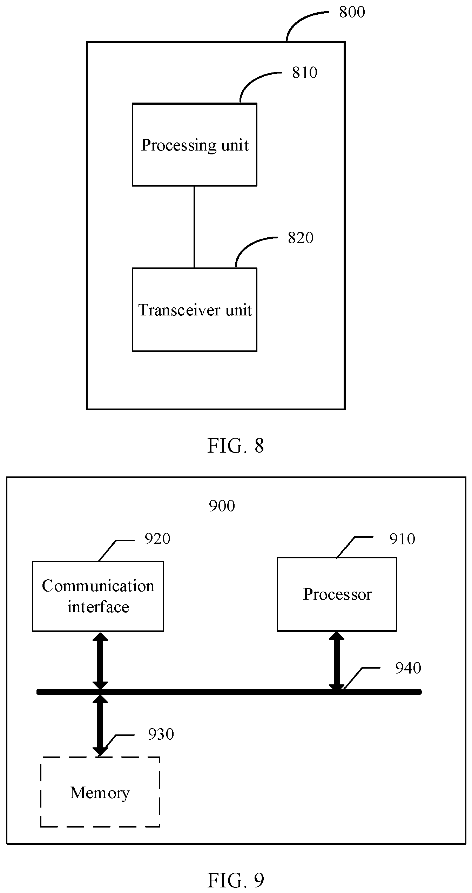

As shown in FIG. 8, based on a same technical concept, an embodiment of this application further provides a communication apparatus 800. The communication apparatus 800 may be a terminal or a network device, may be an apparatus in the terminal device or the network device, or may be an apparatus that can be used together with the terminal device or the network device. In a possible implementation, the communication apparatus 800 may include modules or units correspondingly performing the methods/operations/steps/actions of the transmit end or the receive end in the foregoing method embodiments. The unit may be a hardware circuit, may be software, or may be implemented in a combination of a hardware circuit and software. In a possible implementation, the communication apparatus 800 may include a processing unit 810 and a transceiver unit 820. The processing unit 810 may be configured to invoke the transceiver unit 820 to perform receiving and/or sending functions.

When the communication apparatus 800 is configured to perform a method (for example, the method shown in FIG. 2) at the transmit end, the processing unit 810 is configured to obtain a first sequence. The first sequence includes a first sub-sequence whose length is B and a second sub-sequence whose length is m*K'. The processing unit 810 is configured to: obtain the first sequence, and determine the first sub-sequence and the second sub-sequence based on the first sequence, where a length of the second sub-sequence is m*K'; map the first sub-sequence into K third sub-sequences based on a preset sequence group, where K is an integer greater than or equal to 2, and K' is a positive integer less than K; perform differential coding and modulation on the second sub-sequence to obtain a fourth sub-sequence whose length is K'; and obtain K fifth sub-sequences based on the K third sub-sequences and the fourth sub-sequence whose length is K'. The transceiver unit 820 is configured to output a second sequence. The second sequence includes the K fifth sub-sequences.

When the communication apparatus 800 is configured to perform a method (for example, the method shown in FIG. 7) at the receive end, the transceiver unit 820 is configured to obtain a second sequence. The second sequence includes K fifth sub-sequences. The processing unit 810 is configured to: detect the K fifth sub-sequences based on a preset sequence group to obtain a first sub-sequence; perform differential demodulation based on the first sub-sequence to obtain a second sub-sequence; and determine a first sequence based on the first sub-sequence and the second sub-sequence.

The transceiver unit 820 is further configured to perform another receiving or sending step or operation in the method at the transmit end or the receive end in the foregoing method embodiments. The processing unit 810 may be further configured to perform a corresponding step or operation other than a receiving/sending step in the method at the transmit end or the receive end in the foregoing method embodiments. Details are not described herein again.

Division into the modules in embodiments of this application is an example, is merely logical function division, and may be other division during actual implementation. In addition, functional modules in embodiments of this application may be integrated into one processor, or each of the modules may exist alone physically, or two or more modules may be integrated into one module. The integrated module or unit may be implemented in a form of hardware, or may be implemented in a form of a software functional module.

Refer to FIG. 9. An embodiment of this application further provides a communication apparatus 900, configured to implement functions of a transmit end device or a receive end device in the foregoing method. The communication apparatus may be a terminal or a network device, may be an apparatus in the terminal or the network device, or may be an apparatus that can be used together with the terminal or the network device. The communication apparatus 900 may be a chip system. In this embodiment of this application, the chip system may include a chip, or may include a chip and another discrete component. The communication apparatus 900 includes at least one processor 910, configured to implement functions of a terminal and a network device in the method provided in embodiments of this application. The communication apparatus 900 may further include a communication interface 920. In this embodiment of this application, the communication interface may be a transceiver, a circuit, a bus, a module, or another type of communication interface, and is configured to communicate with another device by using a transmission medium. For example, the communication interface 920 is used by an apparatus in the communication apparatus 900 to communicate with another device.

The processor 910 may perform functions performed by the processing unit 910 in the communication apparatus 900, and the communication interface 920 may be configured to perform functions performed by the transceiver unit 920 in the communication apparatus 900.

When the communication apparatus 900 is configured to perform a method (for example, the method shown in FIG. 2) at a transmit end, the processor 910 is configured to: obtain a first sequence, and determine a first sub-sequence and a second sub-sequence based on the first sequence, where a length of the second sub-sequence is m*K'; map the first sub-sequence into K third sub-sequences based on a preset sequence group, where K is an integer greater than or equal to 2, and K' is a positive integer less than K; perform differential coding and modulation on the second sub-sequence to obtain a fourth sub-sequence whose length is K'; and obtain K fifth sub-sequences based on the K third sub-sequences and the fourth sub-sequence whose length is K'. The communication interface 920 is configured to output a second sequence. The second sequence includes the K fifth sub-sequences.

When the communication apparatus 900 is configured to perform a method (for example, the method shown in FIG. 7) at a receive end, the communication interface 920 is configured to obtain a second sequence. The second sequence includes K fifth sub-sequences. The processor 910 is configured to: detect the K fifth sub-sequences based on a preset sequence group to obtain a first sub-sequence; perform differential demodulation based on the first sub-sequence to obtain a second sub-sequence; and determine a first sequence based on the first sub-sequence and the second sub-sequence.

The communication interface 920 is further configured to perform another receiving or sending step or operation involved in the method at the transmit end or the receive end in the foregoing method embodiments. The processor 910 may be further configured to perform a corresponding step or operation other than a receiving/sending step in the foregoing method embodiments. Details are not described herein again.

The communication apparatus 900 may further include at least one memory 930, configured to store program instructions and/or data. The memory 930 is coupled to the processor 910. The coupling in this embodiment of this application is indirect coupling or a communication connection between apparatuses, units, or modules for information exchange between the apparatuses, the units, or the modules, and may be in electrical, mechanical, or other forms. The processor 920 may perform an operation in cooperation with the memory 930. The processor 910 may execute the program instructions stored in the memory 930. In a possible implementation, at least one of the at least one memory may be integrated with the processor. In another possible implementation, the memory 930 is located outside the communication apparatus 900.

A specific connection medium between the communication interface 920, the processor 910, and the memory 930 is not limited in this embodiment of this application. In this embodiment of this application, the memory 930, the processor 910, and the communication interface 920 are connected to each other by using a bus 940 in FIG. 9. The bus is represented by a bold line in FIG. 9. A connection manner between other components is merely an example for description, and imposes no limitation. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor 910 may be a baseband processor. For example, at the transmit end, the processor 910 determines K fifth sub-sequences by using any possible implementation in the foregoing method embodiments, outputs a second sequence (a baseband signal) including the K fifth sub-sequences to a radio frequency circuit by using the communication interface 920. The radio frequency circuit performs radio frequency processing on the baseband signal, and sends a radio frequency signal to the outside in a form of an electromagnetic wave by using an antenna. For example, at the receive end, a radio frequency circuit receives a radio frequency signal by using an antenna, and converts the radio frequency signal into a baseband signal (a second sequence). The communication interface 920 obtains the second sequence. The second sequence includes K fifth sub-sequences. The processor 910 restores a first sequence based on the K fifth sub-sequences by using any possible implementation in the foregoing method embodiments.

It should be noted that the processor 910 may be one or more central processing units (Central Processing Unit, CPU). When the processor 910 is one CPU, the CPU may be a single-core CPU, or may be a multi-core CPU. The processor 910 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, or may be any conventional processor or the like. The steps of the method disclosed with reference to embodiments of this application may be directly performed and completed by a hardware processor, or may be performed and completed by a combination of hardware and software modules in the processor.

In this embodiment of this application, the memory 930 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any other medium that can carry or store expected program code in a form of an instruction structure or a data structure and that can be accessed by a computer, but is not limited thereto. The memory in this embodiment of this application may alternatively be a circuit or any other apparatus that can implement a storage function, and is configured to store program instructions and/or data.

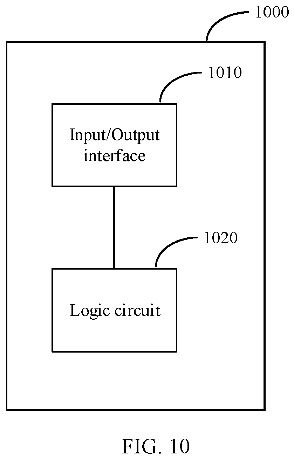

Refer to FIG. 10. An embodiment of this application further provides an apparatus 1000. The apparatus 1000 may be configured to implement functions of a transmit end device or a receive end device in the foregoing method. The apparatus 1000 may be a communication apparatus or a chip in the communication apparatus. The communication apparatus includes:
at least one input/output interface 1010 and a logic circuit 1020. The input/output interface 1010 may be an input/output circuit. The logic circuit 1020 may be a signal processor, a chip, or another integrated circuit that can implement the method in this application.

The at least one input/output interface 1010 is configured to input or output a signal or data. For example, when the apparatus is a transmit end device or is used in a transmit end device, the input/output interface 1010 is configured to obtain a first sequence. The input/output interface 1010 is further configured to output a second sequence. The second sequence includes K fifth sub-sequences. For example, when the apparatus is a receive end device or is used in a receive end device, the input/output interface 1010 is configured to obtain a second sequence. The second sequence includes K fifth sub-sequences.

The logic circuit 1020 is configured to perform some or all steps of any method provided in embodiments of this application. The logic circuit may implement functions implemented by the processing unit 810 in the foregoing apparatus 800 and the processor 910 in the apparatus 900. For example, when the apparatus is a transmit end device or is used in a transmit end device, the apparatus is configured to perform various steps in the foregoing embodiment of the method at the transmit end. For example, the logic circuit 1020 is configured to: map a first sub-sequence into K third sub-sequences based on a preset sequence group, where K is an integer greater than or equal to 2, and K' is a positive integer less than K; perform differential coding and modulation on a second sub-sequence to obtain a fourth sub-sequence whose length is K'; and obtain K fifth sub-sequences based on the K third sub-sequences and the fourth sub-sequence whose length is K'. When the apparatus is a receive end device or is used in a receive end device, the apparatus is configured to perform steps performed by a transmit end device in various possible implementations in the foregoing embodiment of the method at the receive end. For example, the logic circuit 1020 is configured to: detect K fifth sub-sequences based on a preset sequence group to obtain a first sub-sequence; perform differential demodulation based on the first sub-sequence to obtain a second sub-sequence; and determine a first sequence based on the first sub-sequence and the second sub-sequence.

Based on a same concept as the foregoing method embodiments, an embodiment of this application further provides a computer-readable storage medium. The computer-readable storage medium stores a computer program, and the computer program is executed by hardware (for example, a processor) to implement some or all steps of any method performed by any apparatus in embodiments of this application.

Based on a same concept as the foregoing method embodiments, an embodiment of this application further provides a computer program product including instructions. When the computer program product runs on a computer, the computer is enabled to perform some or all steps of any method in the foregoing aspects.

Based on a same concept as the foregoing method embodiments, this application further provides a chip or a chip system. The chip may include a processor. The chip may further include a memory (or a storage module) and/or a transceiver (or a communication module); or the chip is coupled to a memory (or a storage module) and/or a transceiver (or a communication module). The transceiver (or the communication module) may be configured to support the chip in performing wired and/or wireless communication. The memory (or the storage module) may be configured to store a program. The processor invokes the program to implement operations performed by a transmit end device or a receive end device in the foregoing method embodiments and any possible implementation of the foregoing method embodiments. The chip system may include the foregoing chip, or may include the foregoing chip and another discrete component such as a memory (or a storage module) and/or a transceiver (or a communication module).

Based on a same concept as the foregoing method embodiments, this application further provides a communication system. The communication system may include the foregoing transmit end device and the foregoing receive end device. The transmit end device may be a terminal or a network device, and the receive end device may be a terminal or a network device. The communication system may be configured to implement operations performed by the transmit end device or the receive end device in the foregoing method embodiments and any possible implementation of the foregoing method embodiments. For example, the communication system may have the structure shown in FIG. 1.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing embodiments, descriptions of embodiments have respective focuses. For a part that is not described in detail in an embodiment, refer to related description in other embodiments.

In the foregoing embodiments, descriptions of embodiments have respective focuses. For a part that is not described in detail in an embodiment, refer to related description in other embodiments.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual indirect couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, in other words, may be located in one position, or may be distributed on a plurality of network units. Some or all of the units may be selected based on actual needs to achieve the objectives of the solutions of embodiments.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application.

The foregoing descriptions are merely some specific implementations of this application, but are not intended to limit the protection scope of this application. The scope of protection is defined by the attached claims.

## Claims

1. A data transmission method, comprising:
obtaining (S201) a first sequence of information bits;
determining (S201) a first sub-sequence and a second sub-sequence based on the first sequence, wherein a bit length of the second sub-sequence is m*K';
mapping (S202) the first sub-sequence into K third sub-sequences based on a preset codebook, wherein K is an integer greater than 2, and K' is a positive integer less than K;
wherein the first subsequence is divided into K sub-sequences and each of K third sub-sequences is the result of mapping each of the K sub-sequences to a respective sequence of the codebook;
performing (S203) differential coding and modulation on the second sub-sequence to obtain a fourth sub-sequence whose length is K', wherein a modulation order used for the modulation is 2^m;
obtaining (S204) K fifth sub-sequences based on the K third sub-sequences and the fourth sub-sequence whose length is K';
wherein the K fifth sub-sequences are obtained based on a multiplication of the K third subsequences by respective elements in the fourth sub-sequence;
and
outputting (S205) and transmitting a second sequence, wherein the second sequence comprises the K fifth sub-sequences.

2. The method according to claim 1, wherein
the second sub-sequence is a part of the first sub-sequence; or
the second sub-sequence is the same as the first sub-sequence.

3. The method according to claim 1 or 2, wherein the performing differential coding and modulation on the second sub-sequence to obtain a fourth sub-sequence whose length is K' comprises:
modulating the second sub-sequence to obtain a sixth sub-sequence whose length is K'; and
performing differential coding on the sixth sub-sequence whose length is K' to obtain the fourth sub-sequence whose length is K'.

4. The method according to claim 1 or 2, wherein the performing differential coding and modulation on the second sub-sequence to obtain a fourth sub-sequence whose length is K' comprises:
performing differential coding on the second sub-sequence to obtain a sixth sub-sequence whose length is m*K'; and
modulating the sixth sub-sequence whose length is m*K' to obtain the fourth sub-sequence whose length is K'.

5. The method according to any one of claims 1 to 4, wherein the performing modulation comprises:
performing modulation through M-ary phase shift keying M-PSK.

6. The method according to any one of claims 1 to 5, wherein
the obtaining K fifth sub-sequences zₖ based on the K third sub-sequences x₁ and the fourth sub-sequence cₖ whose length is K' is specifically:
z₁=x₁, wherein k=1, ..., or K-K'; and
zₖ=cₖ₋₁*xₖ, wherein k=K-K'+1, ..., or K.

7. The method according to any one of claims 1 to 6, wherein
each third sub-sequence is a sequence in the preset codebook, and a sequence number of each third sub-sequence in the preset codebook is equal to the value of each K sub-sequence.

8. The method according to claim 7, comprising
adding check bits to the K sub-sequences before the mapping to a respective sequence of the codebook.

9. A data reception method, comprising:
receiving (S701) a second sequence, wherein the second sequence comprises K fifth sub-sequences;
detecting (S702) the K fifth sub-sequences based on a preset codebook to obtain a first sub-sequence;^
wherein the detecting the K fifth sub-sequences based on a preset codebook to obtain a first sub-sequence comprises:
the first sub-sequence comprises K seventh sub-sequences; and
detecting each fifth sub-sequence based on the preset codebook, and determining a sub-sequence that is in the preset codebook and that corresponds to each fifth sub-sequence, wherein a sequence number of the sub-sequence is a value of each seventh sub-sequence; and
determining each seventh sub-sequence based on the value of each seventh sub-sequence;
performing (S703) differential demodulation based on the first sub-sequence to obtain a second sub-sequence; and
determining (S704) a first sequence of information bits based on the first sub-sequence and the second sub-sequence,
wherein the performing differential demodulation based on the first sub-sequence comprises:
determining a phase difference between each fifth sub-sequence and its corresponding seventh sub-sequence; and
performing differential demodulation based on the phase difference to obtain the second sub-sequence.

10. The method according to claim 9, comprising:
determining a phase difference Hₖ between the k^{th} fifth sub-sequence and the k^{th} seventh sub-sequence;
determining a phase difference Hₖ₋₁ between the (k-1)^{th} fifth sub-sequence and the (k-1)^{th} seventh sub-sequence; and
performing differential demodulation on Hₖ and Hₖ₋₁ to obtain a_{k-(K-K')} in the second sub-sequence, wherein k=K-K'+1, ..., or K, K is an integer greater than or equal to 2, and K' is a positive integer less than K.

11. A communication apparatus, comprising a processor, configured to execute a computer program, wherein when the computer program is executed, the apparatus performs the method according to any one of claims 1 to 8; or the method according to any one of claims 9 to 10.

12. A computer-readable storage medium, comprising a computer program, wherein when the computer program is executed on a computer, it causes the computer to perform the method according to any one of claims 1 to 8 or the method according to any one of claims 9 to 10.

13. A computer program product comprising computer executable instructions, wherein when the computer program product runs on a computer, it causes the computer to perform the method according to any one of claims 1 to 8 or the method according to any one of claims 9 to 10.

## Revendications

1. Procédé de transmission de données, comprenant :
l'obtention (S201) d'une première séquence de bits d'information ;
la détermination (S201) d'une première sous-séquence et d'une deuxième sous-séquence sur la base de la première séquence, dans lequel une longueur de bits de la deuxième sous-séquence est m * K' ;
le mappage (S202) de la première sous-séquence sur K troisièmes sous-séquences sur la base d'un livre de codes prédéfini, dans lequel K est un nombre entier supérieur à 2, et K' est un nombre entier positif inférieur à K ;
dans lequel la première sous-séquence est divisée en K sous-séquences et chacune des K troisièmes sous-séquences est le résultat d'un mappage de chacune des K sous-séquences sur une séquence respective du livre de codes ;
la réalisation (S203) d'un codage différentiel et d'une modulation sur la deuxième sous-séquence pour obtenir une quatrième sous-séquence dont la longueur est K', dans lequel un ordre de modulation utilisé pour la modulation est 2^m ;
l'obtention (S204) de K cinquièmes sous-séquences sur la base des K troisièmes sous-séquences et de la quatrième sous-séquence dont la longueur est K' ;
dans lequel les K cinquièmes sous-séquences sont obtenues sur la base d'une multiplication des K troisièmes sous-séquences par des éléments respectifs dans la quatrième sous-séquence ;
et
la sortie (S205) et la transmission d'une seconde séquence, dans lequel la seconde séquence comprend les K cinquièmes sous-séquences.

2. Procédé selon la revendication 1, dans lequel
la deuxième sous-séquence est une partie de la première sous-séquence ; ou
la deuxième sous-séquence est identique à la première sous-séquence.

3. Procédé selon la revendication 1 ou 2, dans lequel la réalisation d'un codage différentiel et d'une modulation sur la deuxième sous-séquence pour obtenir une quatrième sous-séquence dont la longueur est K' comprend :
la modulation de la deuxième sous-séquence pour obtenir une sixième sous-séquence dont la longueur est K' ; et
la réalisation d'un codage différentiel sur la sixième sous-séquence dont la longueur est K' pour obtenir la quatrième sous-séquence dont la longueur est K'.

4. Procédé selon la revendication 1 ou 2, dans lequel la réalisation d'un codage différentiel et d'une modulation sur la deuxième sous-séquence pour obtenir une quatrième sous-séquence dont la longueur est K' comprend :
la réalisation d'un codage différentiel sur la deuxième sous-séquence pour obtenir une sixième sous-séquence dont la longueur est m * K' ; et
la modulation de la sixième sous-séquence dont la longueur est m * K' pour obtenir la quatrième sous-séquence dont la longueur est K'.

5. Procédé selon l'une quelconque des revendications 1 à 4, dans lequel la réalisation d'une modulation comprend :
la réalisation d'une modulation par modulation par déplacement de phase à M états, M-PSK.

6. Procédé selon l'une quelconque des revendications 1 à 5, dans lequel l'obtention de K cinquièmes sous-séquences zₖ sur la base des K troisièmes sous-séquences x₁ et de la quatrième sous-séquence cₖ dont la longueur est K' est spécifiquement :
z₁ = x₁, dans lequel k = 1, ..., ou K - K' ; et
zₖ = cₖ₋₁ * xₖ, dans lequel k = K - K' + 1, ..., ou K.

7. Procédé selon l'une quelconque des revendications 1 à 6, dans lequel chaque troisième sous-séquence est une séquence dans le livre de codes prédéfini, et un numéro de séquence de chaque troisième sous-séquence dans le livre de codes prédéfini est égal à la valeur de chaque K sous-séquence.

8. Procédé selon la revendication 7, comprenant
l'ajout de bits de contrôle aux K sous-séquences avant le mappage sur une séquence respective du livre de codes.

9. Procédé de réception de données, comprenant :
la réception (S701) d'une seconde séquence, dans lequel la seconde séquence comprend K cinquièmes sous-séquences ;
la détection (S702) des K cinquièmes sous-séquences sur la base d'un livre de codes prédéfini pour obtenir une première sous-séquence ;^ dans lequel la détection des K cinquièmes sous-séquences sur la base d'un livre de codes prédéfini pour obtenir une première sous-séquence comprend :
la première sous-séquence comprend K septièmes sous-séquences ; et
la détection de chaque cinquième sous-séquence sur la base du livre de codes prédéfini, et la détermination d'une sous-séquence qui est dans le livre de codes prédéfini et qui correspond à chaque cinquième sous-séquence, dans lequel un numéro de séquence de la sous-séquence est une valeur de chaque septième sous-séquence ; et
la détermination de chaque septième sous-séquence sur la base de la valeur de chaque septième sous-séquence ;
la réalisation (S703) d'une démodulation différentielle sur la base de la première sous-séquence pour obtenir une deuxième sous-séquence ; et
la détermination (S704) d'une première séquence de bits d'information sur la base de la première sous-séquence et de la deuxième sous-séquence, dans lequel la réalisation d'une démodulation différentielle sur la base de la première sous-séquence comprend :
la détermination d'un déphasage entre chaque cinquième sous-séquence et sa septième sous-séquence correspondante ; et
la réalisation d'une démodulation différentielle sur la base du déphasage pour obtenir la deuxième sous-séquence.

10. Procédé selon la revendication 9, comprenant :
la détermination d'un déphasage Hₖ entre la k^{ième} cinquième sous-séquence et la k^{ième} septième sous-séquence ;
la détermination d'un déphasage Hₖ₋₁ entre la (k-1)^{ième} cinquième sous-séquence et la (k-1)^{ième} septième sous-séquence ; et
la réalisation d'une démodulation différentielle sur Hₖ et Hₖ₋₁ pour obtenir a_{k-(K-K')} dans la deuxième sous-séquence, dans lequel k = K -K' + 1, ..., ou K, K est un nombre entier supérieur ou égal à 2, et K' est un nombre entier positif inférieur à K.

11. Appareil de communication, comprenant un processeur, configuré pour exécuter un programme informatique, dans lequel, lorsque le programme informatique est exécuté, l'appareil réalise le procédé selon l'une quelconque des revendications 1 à 8 ; ou
le procédé selon l'une quelconque des revendications 9 à 10.

12. Support de stockage lisible par ordinateur, comprenant un programme informatique, dans lequel, lorsque le programme informatique est exécuté sur un ordinateur, il amène l'ordinateur à réaliser le procédé selon l'une quelconque des revendications 1 à 8 ou le procédé selon l'une quelconque des revendications 9 à 10.

13. Produit-programme d'ordinateur comprenant des instructions exécutables par ordinateur, dans lequel, lorsque le produit-programme d'ordinateur s'exécute sur un ordinateur, il amène l'ordinateur à réaliser le procédé selon l'une quelconque des revendications 1 à 8 ou le procédé selon l'une quelconque des revendications 9 à 10.

## Patentansprüche

1. Datenübermittlungsverfahren, das umfasst:
Erhalten (S201) einer ersten Folge von Informationsbits;
Bestimmen (S201) einer ersten Teilfolge und einer zweiten Teilfolge basierend auf der ersten Folge, wobei eine Bitlänge der zweiten Teilfolge m*K' ist;
Abbilden (S202) der ersten Teilfolge auf K dritte Teilfolgen basierend auf einem vorgegebenen Codebuch, wobei K eine ganze Zahl größer als 2 ist und K' eine positive ganze Zahl kleiner als K ist;
wobei die erste Teilfolge in K Teilfolgen unterteilt wird und jede Folge von K dritten Teilfolgen das Ergebnis des Abbildens jeder der K Teilfolgen auf eine jeweilige Folge des Codebuchs ist;
Durchführen (S203) einer differenziellen Codierung und Modulation an der zweiten Teilfolge, um eine vierte Teilfolge zu erhalten, deren Länge K' ist, wobei eine für die Modulation verwendete Modulationsordnung 2^m ist;
Erhalten (S204) von K fünften Teilfolgen basierend auf den K dritten Teilfolgen und der vierten Teilfolge, deren Länge K' ist;
wobei die K fünften Teilfolgen basierend auf einer Multiplikation der K dritten Teilfolgen mit jeweiligen Elementen in der vierten Teilfolge erhalten werden;
und
Ausgeben (S205) und Übertragen einer zweiten Folge, wobei die zweite Folge die K fünften Teilfolgen umfasst.

2. Verfahren nach Anspruch 1, wobei
die zweite Teilfolge ein Teil der ersten Teilfolge ist; oder
die zweite Teilfolge die gleiche wie die erste Teilfolge ist.

3. Verfahren nach Anspruch 1 oder 2, wobei das Durchführen einer differenziellen Codierung und Modulation an der zweiten Teilfolge, um eine vierte Teilfolge zu erhalten, deren Länge K' ist, Folgendes umfasst:
Modulieren der zweiten Teilfolge, um eine sechste Teilfolge zu erhalten, deren Länge K' ist; und
Durchführen einer differenziellen Codierung an der sechsten Teilfolge, deren Länge K' ist, um die vierte Teilfolge zu erhalten, deren Länge K' ist.

4. Verfahren nach Anspruch 1 oder 2, wobei das Durchführen einer differenziellen Codierung und Modulation an der zweiten Teilfolge, um eine vierte Teilfolge zu erhalten, deren Länge K' ist, Folgendes umfasst:
Durchführen einer differenziellen Codierung an der zweiten Teilfolge, um eine sechste Teilfolge zu erhalten, deren Länge m*K' ist; und
Modulieren der sechsten Teilfolge, deren Länge m*K' ist, um die vierte Teilfolge zu erhalten, deren Länge K' ist.

5. Verfahren nach einem der Ansprüche 1 bis 4, wobei das Durchführen einer Modulation Folgendes umfasst:
Durchführen einer Modulation mittels M-ärer Phasenumtastung (M-PSK).

6. Verfahren nach einem der Ansprüche 1 bis 5, wobei
das Erhalten von K fünften Teilfolgen zₖ basierend auf den K dritten Teilfolgen x₁ und der vierten Teilfolge cₖ, deren Länge K' ist, insbesondere folgendermaßen erfolgt:
z₁=x₁, wobei k=1, ..., oder K-K' ist; und
Zₖ=cₖ₋₁*xₖ, wobei k=K-K'+1, ..., oder K ist.

7. Verfahren nach einem der Ansprüche 1 bis 6, wobei jede der dritten Teilfolgen eine Folge in dem vorgegebenen Codebuch ist und eine Folgennummer jeder der dritten Teilfolgen in dem vorgegebenen Codebuch gleich dem Wert jeder der K Teilfolgen ist.

8. Verfahren nach Anspruch 7, das Folgendes umfasst:
Hinzufügen von Prüfbits zu den K Teilfolgen vor dem Abbilden auf eine jeweilige Folge des Codebuchs.

9. Datenempfangsverfahren, das Folgendes umfasst:
Empfangen (S701) einer zweiten Folge, wobei die zweite Folge K fünfte Teilfolgen umfasst;
Detektieren (S702) der K fünften Teilfolgen basierend auf einem vorgegebenen Codebuch, um eine erste Teilfolge zu erhalten;^
wobei das Detektieren der K fünften Teilfolgen basierend auf einem vorgegebenen Codebuch, um eine erste Teilfolge zu erhalten, Folgendes umfasst:
die erste Teilfolge umfasst K siebte Teilfolgen; und
Detektieren jeder der fünften Teilfolgen basierend auf dem vorgegebenen Codebuch und Bestimmen einer Teilfolge, die in dem vorgegebenen Codebuch ist und die jeder fünften Teilfolgen entspricht, wobei eine Folgennummer der Teilfolge ein Wert jeder der siebten Teilfolgen ist; und
Bestimmen jeder der siebten Teilfolgen basierend auf dem Wert jeder siebten der Teilfolgen;
Durchführen (S703) einer differenziellen Demodulation basierend auf der ersten Teilfolge, um eine zweite Teilfolge zu erhalten; und
Bestimmen (S704) einer ersten Folge von Informationsbits basierend auf der ersten Teilfolge und der zweiten Teilfolge, wobei das Durchführen der differenziellen Demodulation basierend auf der ersten Teilfolge Folgendes umfasst:
Bestimmen einer Phasendifferenz zwischen jeder der fünften Teilfolgen und der ihr entsprechenden siebten Teilfolge; und
Durchführen einer differenziellen Demodulation basierend auf der Phasendifferenz, um die zweite Teilfolge zu erhalten.

10. Verfahren nach Anspruch 9, das umfasst:
Bestimmen einer Phasendifferenz Hₖ zwischen der k-ten fünften Teilfolge und der k-ten siebten Teilfolge;
Bestimmen einer Phasendifferenz Hₖ₋₁ zwischen der (k-1)-ten fünften Teilfolge und der (k-1)-ten siebten Teilfolge; und
Durchführen einer differenziellen Demodulation an Hₖ und Hₖ₋₁, um a_{k-(K-K')} in der zweiten Teilfolge zu erhalten, wobei k=K-K'+1, ... oder K ist, K eine ganze Zahl größer als oder gleich 2 ist und K' eine positive ganze Zahl kleiner als K ist.

11. Kommunikationsvorrichtung, die einen Prozessor umfasst, der konfiguriert ist, um ein Computerprogramm auszuführen, wobei, wenn das Computerprogramm ausgeführt wird, die Vorrichtung das Verfahren nach einem der Ansprüche 1 bis 8; oder
das Verfahren nach einem der Ansprüche 9 bis 10 durchführt.

12. Computerlesbares Speichermedium, das ein Computerprogramm umfasst, wobei, wenn das Computerprogramm auf einem Computer ausgeführt wird, der Computer dazu veranlasst wird, das Verfahren nach einem der Ansprüche 1 bis 8 oder das Verfahren nach einem der Ansprüche 9 bis 10 durchzuführen.

13. Computerprogrammprodukt, das computerausführbare Anweisungen umfasst, wobei, wenn das Computerprogrammprodukt auf einem Computer läuft, der Computer dazu veranlasst wird, das Verfahren nach einem der Ansprüche 1 bis 8 oder das Verfahren nach einem der Ansprüche 9 bis 10 durchzuführen.
